# EUROPEAN PATENT SPECIFICATION

(11) **EP 3 841 547 B1**
(45) Date of publication and mention of the grant of the patent: **25.11.2026**
(21) Application number: 19763142.7
(22) Date of filing: 20.08.2019
(51) Int. Cl.: G06Q 30/06, G06Q 30/00, G06Q 30/02, G06Q 10/08, G06Q 20/20

(54) **SELF-SERVICE PRODUCT RETURN USING COMPUTER VISION AND ARTIFICIAL INTELLIGENCE**
SELBSTBEDIENUNGSPRODUKTRÜCKGABE MITHILFE VON COMPUTERSICHT UND KÜNSTLICHER INTELLIGENZ
RETOUR DE MARCHANDISES EN LIBRE-SERVICE À L'AIDE DE VISION INFORMATIQUE ET D'INTELLIGENCE ARTIFICIELLE

(30) Priority: 21.08.2018 US 201816107175
(43) Date of publication of application: 30.06.2021
(73) Proprietor: Sensormatic Electronics LLC, Boca Raton, FL 33487 (US)
(72) Inventor: PAOLELLA, Michael, Lake Zurich, Illinois 60047 (US); PALELLA, Michelangelo, Bartlett, Illinois 60103 (US); TRIVELPIECE, Steve, Santa Margarita, California 92688 (US); PATIL, Amit, Naperville, Illinois 60540 (US)
(74) Representative: Meissner Bolte Nürnberg
(86) International application number: PCT/US2019/047287
(87) International publication number: WO 2020/041328

(56) References cited:
- CN-A- 107 688 991
- US-A1- 2017 260 010
- US-A1- 2018 047 006

## Description

### CROSS REFERENCE TO RELATED APPLICATIONS

This application claims priority to U.S. Non-Provisional Patent Application Serial No. 16/107,175 entitled "SELF-SERVICE PRODUCT RETURN USING COMPUTER VISION AND ARTIFICIAL INTELLIGENCE" and filed on August 21, 2018.

### BACKGROUND

### Statement of the Technical Field

The present disclosure relates generally to computing systems. More particularly, the present disclosure relates to implementing systems and methods for self-service product return using computer vision and Artificial Intelligence ("AI").

### Description of the Related Art

Today when you want to return an item to a retail store you need to find the receipt, take the item to the store, stand in a long line, and then explain why you are returning the product. This is a slow and inefficient process. It costs the store a lot of money to have an employee assist in the return process. In addition, the process does not have much security and thieves return products that are damaged or that they did not pay for. Some companies have implemented ideas like Quick Response ("QR") codes to help speed up the process. However, this process is still expensive since an employee is still needed to assist in the return process.

US2018/0047006 A1 describes an automated method for returning goods to a retail establishment where the goods were acquired. The method comprises initiating a request to return goods purchased from the retail establishment; positioning the returned goods on a conveyor belt for transport to a location where the goods can be validated; validating the goods by a combination of a validation device proximal the conveyor belt and a return processing system; and generating a refund for the returned goods in response to a positive validation result.

US2017/0260010 A1 describes a method for facilitating both a normal return process and a customer self-service return process. The method comprises: returning by a customer a store item to a retail store; and providing a belted system for transferring the store item from a customer service area of the retail store to a back storage area of the retail store, the belted system comprising: a customer facing device for use by a retail store customer to enter return merchandise data; a scanning device for identifying the returned merchandise; and at least one conveyor belt at the retail store for transporting the returned merchandise from the customer service area to the back storage area.

CN107688991 A discloses a goods return device for self-service shops, comprising a cabinet component, a goods inspection component, a circuit mainboard and a conveying component. The cabinet component includes a cabinet body, an operating panel, a returned goods entry and a goods collecting gate. The goods inspection component, the circuit mainboard and the conveying component are positioned inside and/or outside the cabinet body, and the conveying component is positioned below the operating panel, the returned goods entry and the goods collecting gate. The goods return device is capable of confirming whether returned goods have been sold in a self-service shop by scanning and filming manner, and whether the returned goods are already damaged. The returned goods are forcibly pulled back when goods returning is successful.

### SUMMARY

The invention is defined in the independent claims. Embodiments result from the dependent claims and the description below.

The present disclosure concerns implementing systems and methods for returning an item. The methods comprise: performing item return operations by a computing device using machined learned information about a condition of the item at the time of sale. The method comprises automatively sorting the item using a conveyer system to move the item from a counter to a respective storage bin of a plurality of storage bin assigned to different product types. In embodiments, performing item return operations includes using machine learned information about a person who purchased the item.

In some scenarios, the methods may comprise: learning features and characteristics of counterfeit items which are not consistent with features and characteristics of corresponding non-counterfeit items; determining if the item is a counterfeit item based on the learned features and characteristics of counterfeit items; allowing return of the item if it is determined that the item is not a counterfeit item; and denying the return of the item if it is determined that the item is a counterfeit item.

In those or other scenarios, the methods may further comprise verifying that the item's return is authorized by (A) determining if a credit card number, token or code obtained from a user matches that used to purchase the item, or (B) determining if a person shown in an image captured by a camera located by a return station matches a person shown in an image captured during a purchase transaction for the item. According to claim 1, imaging and scanning operations are performed to determine item related information comprising a product type for the item, and zero or more of a brand of the item, a size of the item, a color of the item, an authentication mark made on the item, a weight of the item, and a code associated with the item. A validation can be made that the item being returned is a previously purchased item based on the item related information. According to claim 1, a validation is made that the item is not associated with a previous return attempt based on the item related information.

According to claim 1, the condition of the item at the time of return is determined. The item's condition is then used to determine if it is damaged or can be resold..

### BRIEF DESCRIPTION OF THE DRAWINGS

The present solution will be described with reference to the following drawing figures, in which like numerals represent like items throughout the figures.
FIG. 1 is an illustration of an illustrative system.
FIG. 2 is an illustration of an illustrative computing device.
FIGS. 3A-3D (collectively referred to as "FIG. 3") provide a flow diagram of an illustration method for returning an item which was purchased.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present solution may be embodied in other specific forms. The described embodiments are to be considered in all respects only as illustrative and not restrictive. The scope of the present solution is, therefore, indicated by the appended claims.

Reference throughout this specification to features, advantages, or similar language does not imply that all of the features and advantages that may be realized with the present solution should be or are in any single embodiment of the present solution. Rather, language referring to the features and advantages is understood to mean that a specific feature, advantage, or characteristic described in connection with an embodiment is included in at least one embodiment of the present solution. Thus, discussions of the features and advantages, and similar language, throughout the specification may, but do not necessarily, refer to the same embodiment.

Furthermore, the described features, advantages and characteristics of the present solution may be combined in any suitable manner in one or more embodiments. One skilled in the relevant art will recognize, in light of the description herein, that the present solution can be practiced without one or more of the specific features or advantages of a particular embodiment. In other instances, additional features and advantages may be recognized in certain embodiments that may not be present in all embodiments of the present solution.

Reference throughout this specification to "one embodiment", "an embodiment", or similar language means that a particular feature, structure, or characteristic described in connection with the indicated embodiment is included in at least one embodiment of the present solution. Thus, the phrases "in one embodiment", "in an embodiment", and similar language throughout this specification may, but do not necessarily, all refer to the same embodiment.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

In retail stores, there is a need for a way to return purchased items without a requirement for store employee assistance. Accordingly, the present solution provides an automated way for items to be returned to retail stores or other business entities (e.g., libraries). Multiple systems are used to speed up the return process and to verify the authenticity and quality of the returned products. These systems comprise cameras. Cameras have improved in quality and price over the years. In addition, AI and machine learning allow cameras to: identify a person, receipt, and/or credit card; determine the state or condition of a product being returned; and/or determine the authenticity of the product being returned. Furthermore, the cost of storing data associated with past purchases and about the sold products allow companies to store data that can be used to verify the validity of the return products.

The present solution will now be described in relation to the return of purchased items. The present solution is not limited in this regard. The present solution can also be used in loaned or borrowed item applications.

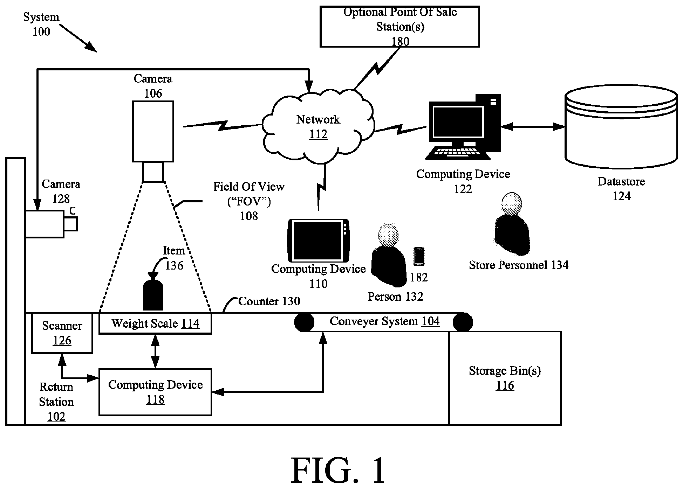

Referring now to FIG. 1, there is provided an illustration of an illustrative system 100. System 100 is generally configured to facilitate the purchase of items and/or the return of purchased items 136. The items include perishable items (e.g., food) and/or non-perishable items (e.g., apparel, appliances, automotive parts, beauty supplies, personal care items, books, consumer electronics, entertainment tickets, fashion accessories, footwear, office supplies, sports equipment, toys, video games, watches, glasses and/or jewelry).

As shown in FIG. 1, system 100 comprises one or more optional Point Of Sale ("POS") stations. POS stations are well known in the art, and therefore will not be described herein. Any known or to be known POS station can be used herein without limitation. The POS station includes a fixed POS station (e.g., a traditional checkout counter), a self-checkout kiosk, or a mobile POS (e.g., a smart phone). The POS station(s) is(are) generally configured to facilitate the initiation of a purchase transaction and the completion of the same. In some scenarios, a conventional POS station is modified to implement machine learning technology. For example, hardware and/or software is provided with a POS station that is configured to learn features/characteristics of a purchaser, learn patterns of movement of the purchaser, and/or learn features/characteristics/conditions of a purchased item. The learned information is stored in a datastore 124 for later use in an item return process. Datastore 124 can include, but is not limited to, a database.

System **100** also comprises a return station 102, cameras **106, 128,** and computing devices **110, 122** communicatively coupled to each other via a network 112 (e.g., the Internet). Cameras are well known in the art, and therefore will not be described herein. Any known or to be known camera can be used herein without limitation. For example, in some scenarios, 3D cameras are employed. The cameras are generally configured to capture images and/or videos of scenes in their Field Of Views ("FOVs"). The term "Field Of View" or "FOV", as used herein, refers to the extent of the observable world that is captured at any given moment by a camera. Each FOV has a value less than or equal to one hundred eighty degrees (180°).

Camera **128** is placed at a location relative to the return station **102** that is suitable for capturing images and/or videos of people **132** trying to return items **136.** Camera **128** is provided to assist in verifying that the same person who purchased the item is the same person who is returning the item. In this regard, the camera **128** employs algorithms to identify a person in its FOV and extract features of the identified person. The extracted features are compared against features shown in an image captured at the time of a respective purchase transaction performed by the POS station **180.** If a match exists, then a verification is made that the person is the same person who purchased the item. If a match does not exist, then a flag can be set and/or store personnel can be notified. Additionally or alternatively, the image of the different person captured at the time of return can be stored in a datastore **124** so as to be associated with a user account, the respective purchase transaction and/or the item return attempt.

Camera **106** is positioned above the return station **102** so that at least a portion of a counter **130** is in its FOV **108.** Camera **106** is provided to assist in identifying items being returned and/or in determining the conditions of the items being returned. In this regard, the camera **106** employs algorithms to determine what the item(s) is(are) on the counter **130** (and in some scenarios on the weight scale **114** which is optional). For example, the camera **106** is able to identify an object in an image captured thereby, determine characteristics of the object (e.g., color, size, shape, etc.), and determine a condition of the object (e.g., damaged or resalable). The characteristics are then compared against a database of object-related data to determine if a match or a similarity exits therebetween. If a match or similarity exits, then the object unique identifier associated with the matching or similar stored object-related data is allocated to the image. The condition is also compared against a condition for the item shown in an image captured at the time of its purchase. If a match does not exist, then a flag can be set that the item may not be resalable or was not sold in a damaged state as suggested by the person returning the item. Store personnel could be notified in either case.

Computing device **110** comprises a mobile computing device, such as a tablet, personal computer or smart phone. Computing device **110** is used by a person **132** to initiate an item return process, input information into system **100** during the item return process, and complete the item return process. Accordingly, computing device **110** wirelessly communicates with an enterprise system **122, 124** via the network **112** for accessing purchase transaction information generated by the POS station **180** and notifying store personnel **134** of the item return process's status. The enterprise system comprises a computing device **122** (e.g., a server) and a datastore **124.** The purchase transaction information includes, but is not limited to, identifiers for purchased items, dates/times of successful purchases, payment information, biometric data for the people who made the purchases, voices of the people who made the purchases, images of people who made the purchases, and/or videos of the purchase transaction. The particulars of the item return process will become more evident as the discussion progresses.

The return station **102** comprises a counter **130** with a scanner **126,** a weight scale **114** and a conveyer system **104** disposed therein so as to be accessible for use during the item return process. The scanner can include, but is not limited to, a barcode scanner, an RFID tag scanner, or other Short Range Communication ("SRC") enabled device (e.g., a Bluetooth enabled device). The scanner is provided to acquire at least one code from the item **136** being returned. The code can include, but is not limited to, a Stock Keeping Unit ("SKU") and/or a Unique Product Code ("UPC"). SKUs and UPCs are well known in the art, and therefore will not be described herein. The weight scale **114** is configured to measure the weight of an item **136** placed thereon. Barcode scanners, RFID tag scanners, and weight scales are well known in the art, and therefore will not be described herein. Any known or to be known barcode scanner, RFID tag scanner, and/or weight scale can be used herein without limitation. Information generated by or obtained by components **114, 126** is provided to a computing device **118** internal to the return station **102.** Computing device **118** is communicatively coupled to computing device **110** and the enterprise system **122, 124** as well via network (although not shown in FIG. 1). Therefore, the information generated by or obtained by components **114, 126** can be provided from computing device **118** to computing device **110, 122** for processing.

Computing device **118** is also configured to control operations of the scanner **126,** weight scale **114** and/or the conveyer system **104.** Conveyer systems are well known in the art, and therefore will not be described in detail herein. Still, it should be understood that the conveyer system **104** comprises mechanical handling equipment for moving items from the return counter **118** to storage bin(s) **116.** With the assistance of computing device **118,** the items are directed to respective ones of the storage bins **116** based on their product type. For example, a book is directed to a first storage bin, while shampoo is directed to a second different storage bin. The storage bin(s) **116** provide(s) a means for storing return items until the store employee **134** is ready to replace them on a store floor for resale. This ability to automatively organize returned items by type greatly improves a subsequent process for placing returned items back on a store floor. In this regard, it should be understood that in conventional systems returned items are typically placed in a single bin at the return station. As such, prior to replacement of the same on a store floor, store personal must sort the items in accordance with a store floor layout (e.g., all toiletry items are sorted into a first pile, while home goods are sorted into a second pile) and/or conditions of the same (e.g., damaged items are sorted into a third pile). In contrast, no such manual storing is required by the present solution. Accordingly, the present solution provides a more cost effective and efficient process for placing returned item back in a store floor.

The present solution employs machine learning techniques for various purposes. The machine learning techniques can be implemented by the POS station(s) **180** and/or computing devices **110, 118, 122.** For example, a machine learning algorithm is used to learn features and characteristics of counterfeit items. Images of the real or original items captured by a camera at a checkout POS station **180** and images of the fake or counterfeit items captured by camera **106** at the return station **102** can be used here to detect and learn features and/or characteristics thereof which are not consistent with those of the corresponding original or real non-counterfeit item. The features and/or characteristics can include, but are not limited to, stitching, label placement, label orientation, coloration, texturing, material, and misspelling of brand names. Detection of fake or counterfeit items has traditionally been quite difficult and required the assistance of experts. The machine learning aspect of the present solution provides an improved item return process since (A) it eliminates the need for experts while still ensuring that counterfeit items will not be accepted for return (as has been the case in some scenarios when store personnel manually handles item returns) and (B) continuously learns new features of counterfeit items so as to ensure real time updates are made in system **100** for learned counterfeit item features/characteristics. Machine learning algorithms are well known in the art, and therefore will not be described herein. Any known or to be known machine learning algorithm can be used herein without limitation. For example, supervised machine learning algorithm(s), unsupervised machine learning algorithm(s) and/or semi-supervised machine learning algorithm(s) are employed by system **100.**

The present solution is not limited to the architecture shown in FIG. 1. In this regard, it should be understood that system **100** can include more or less components than that shown in FIG. 1. For example, in some scenarios, system **100** also comprises a printer for generating paper receipts.

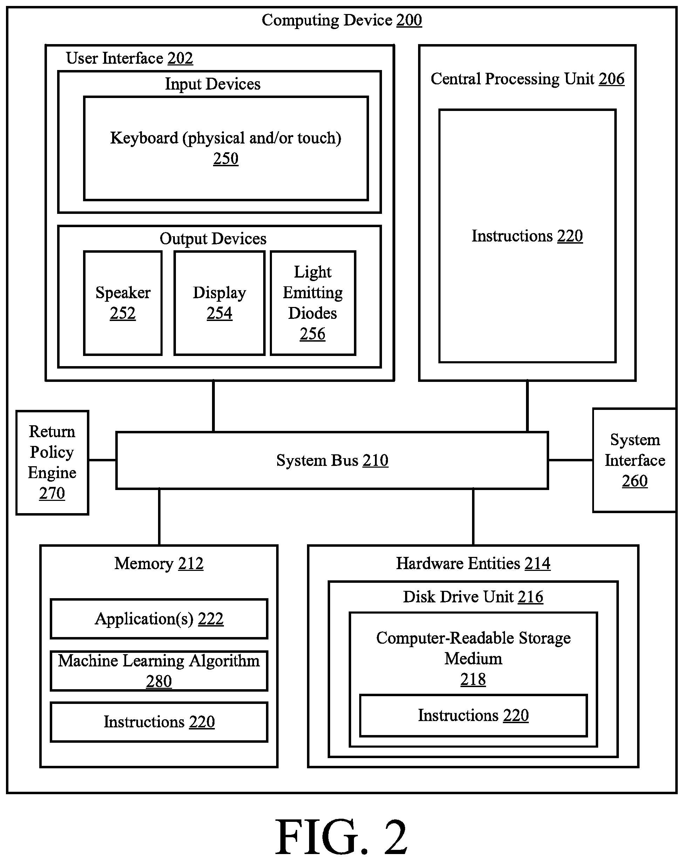

Referring now to FIG. 2, there is provided an illustration of an illustrative architecture for a computing device **200.** Computing device **110, 118, 122** of FIG. 1 is(are) the same as or similar to computing device **200.** As such, the discussion of computing device **200** is sufficient for understanding this component of system **100.**

In some scenarios, the present solution is used in a client-server architecture. Accordingly, the computing device architecture shown in FIG. 2 is sufficient for understanding the particulars of client computing devices and servers.

Computing device **200** may include more or less components than those shown in FIG. 2. However, the components shown are sufficient to disclose an illustrative solution implementing the present solution. The hardware architecture of FIG. 2 represents one implementation of a representative computing device configured to provide an improved item return process, as described herein. As such, the computing device **200** of FIG. 2 implements at least a portion of the method(s) described herein.

Some or all components of the computing device **200** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. 2, the computing device **200** comprises a user interface **202,** a Central Processing Unit ("CPU") **206,** a system bus **210,** a memory **212** connected to and accessible by other portions of computing device **300** through system bus **210,** a system interface **260,** and hardware entities **214** connected to system bus **210.** The user interface can include input devices and output devices, which facilitate user-software interactions for controlling operations of the computing device **200.** The input devices include, but are not limited, a physical and/or touch keyboard **250.** The input devices can be connected to the computing device **200** via a wired or wireless connection (e.g., a Bluetooth^{®} connection). The output devices include, but are not limited to, a speaker **252,** a display **254,** and/or light emitting diodes **256.** System interface **260** is configured to facilitate wired or wireless communications to and from external devices (e.g., network nodes such as access points, etc.).

At least some of the hardware entities **214** perform actions involving access to and use of memory **212,** which can be a Radom Access Memory ("RAM"), a disk driver and/or a Compact Disc Read Only Memory ("CD-ROM"). Hardware entities **214** can include a disk drive unit **216** comprising a computer-readable storage medium **218** on which is stored one or more sets of instructions **220** (e.g., software code) configured to implement one or more of the methodologies, procedures, or functions described herein. The instructions **220** can also reside, completely or at least partially, within the memory **212** and/or within the CPU **206** during execution thereof by the computing device **200.** The memory **212** and the CPU **206** also can constitute machine-readable media. The term "machine-readable media", as used here, refers to a single medium or multiple media (e.g., a centralized or distributed database, and/or associated caches and servers) that store the one or more sets of instructions **220.** The term "machine-readable media", as used here, also refers to any medium that is capable of storing, encoding or carrying a set of instructions **220** for execution by the computing device **200** and that cause the computing device **200** to perform any one or more of the methodologies of the present disclosure.

Computing device **200** implements machine learning technology. In this regard, computing device **200** runs one or more software applications **222** for facilitating the return of items. The software algorithms **222** use machine learning algorithms **280** to learn characteristics of people associated with purchase transactions and/or credit cards used for payment during the purchase transactions, learn conditions of items at the time of purchase, learn characteristics of original real non-counterfeit items, learn characteristics or traits of counterfeit items, learn characteristic of times at the time of return, and/or learn suspicious conduct indicating that a person is trying to return items which have not been purchased or which are counterfeit. This learned information can be used for various purposes as described herein. For example, an image of a person returning an item can be captured and processed to extract features of the person. The extracted features are compared to learned features of a person associated with the purchase transaction for the item and/or credit card used to purchase the item. The learned features were obtained using sensor data obtained during the purchase transaction (e.g., captured images). Alternatively or additionally, the authenticity of an item being returned can be determined based on the learned characteristics of original real non-counterfeit items and/or the learned characteristics or traits of counterfeit items. Also, return abuses (e.g., free renting) are detected using learned conditions of an item at the time of purchase and at the time of return. The present solution is not limited to the particulars of this example.

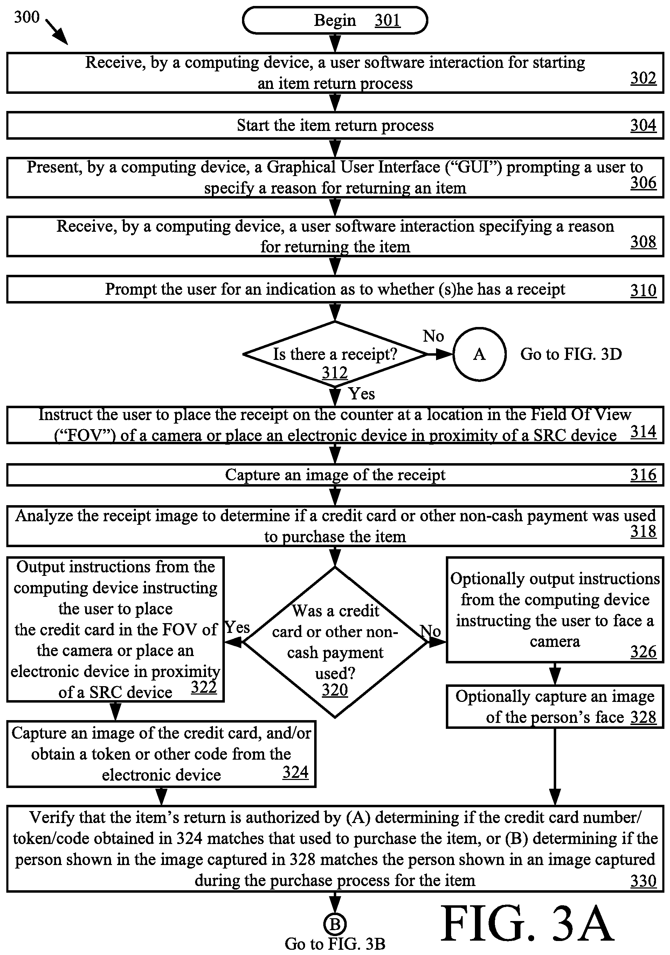

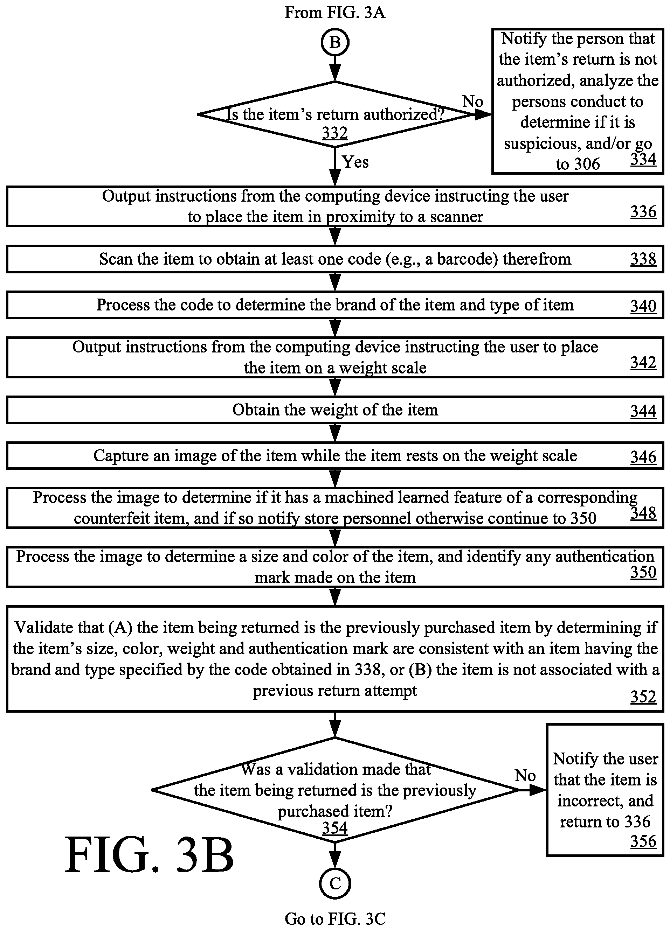

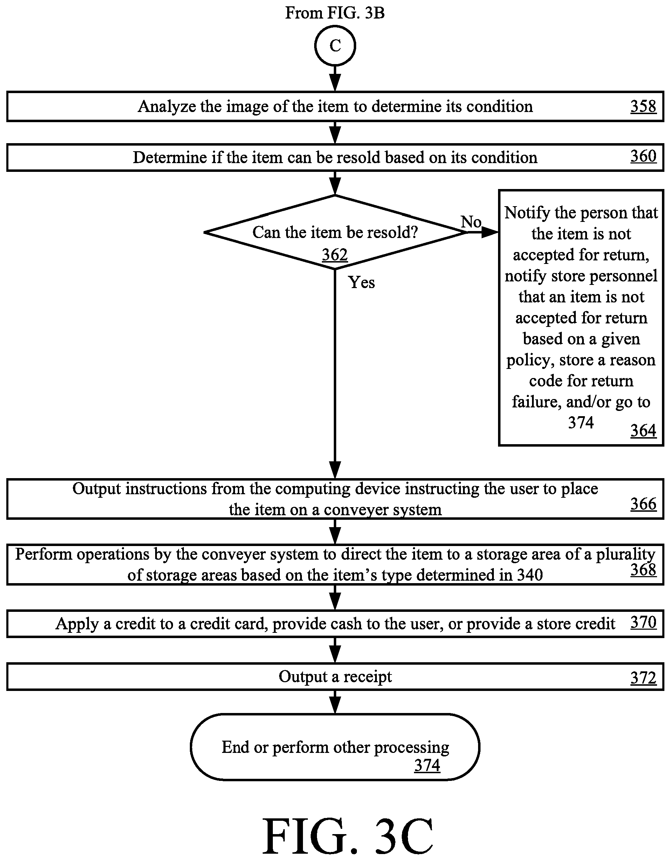

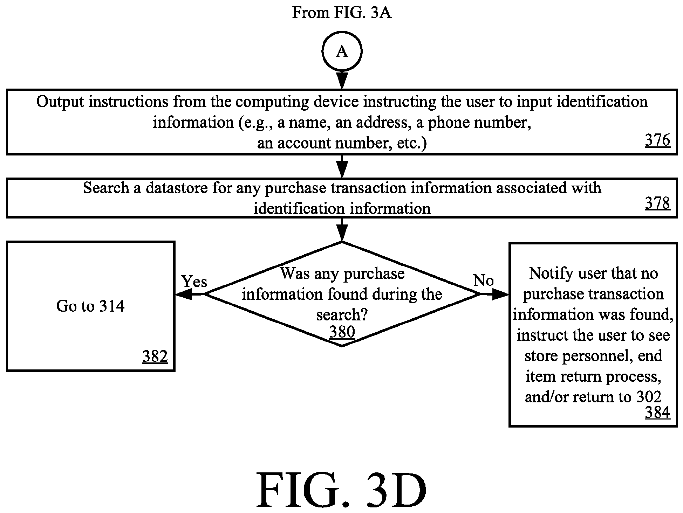

Referring now to FIG. 3, there is provided a flow diagram of an illustrative method **300** for returning an item which had been purchased using a POS station (e.g., POS station **180** of FIG. 1). As shown in FIG. 3, method **300** comprises a plurality of operations **301-384.** Method **300** can include more or less operations than that shown in accordance with a given application. Also, the present solution is not limited to the particular order of the operations shown in FIG. 3. In this regard, it should be understood that some or all of the operations can be performed in the same or different order than that shown.

Referring now to FIG. 3A, method **300** begins with **301** and continues with **302** where a computing device (e.g., computing device **110** of FIG. 1) receives a user software interaction for starting an item return process. This computing device can include, but is not limited to, a tablet, a smart phone or other portable electronic device. A tether, chain or other linkage may be provided for securely coupling the computing device to a return station (e.g., return station **102** of FIG. 1). This secure coupling ensures that the computing device will not be stolen, accidently misplaced, or damaged due to being dropped. The user software interaction can include, but is not limited to, the selection of an item from a drop down menu or the depression of a virtual button presented on a display (e.g., display **254** of FIG. 2) of the computing device. In response to the user-software interaction, the item return process is started in **304.**

In **306,** a Graphical User Interface ("GUI") is presented to the user of the computing device. By way of the GUI, the user is prompted to specify a reason for returning an item (e.g., item **136** of FIG. 1). The reasons can include, but are not limited to, defective, damaged, improper fit, wrong item, changed mind about item, and/or item arrived too late. In **308,** a user software interaction is performed to specify the reason for returning the item. The user software interaction can include, but is not limited to, entering text into a text box, selecting a reason from a list of reasons, selecting a box on the GUI, depressing a virtual button of the GUI, or using any other widget.

Next in **310,** the user (e.g., person **132** of FIG. 1) is prompted for an indication as to whether (s)he has a receipt. The receipt can be a hardcopy (or printed) receipt or an electronic receipt. In response to this prompt, the user performs a user-software interaction for indicating that (s)he has a receipt. The user-software interaction can include, but is not limited to, entering text in a text box, selecting a box on the GUI, depressing a virtual button of the GUI, or using any other widget.

If the user does not have a receipt **[312:NO],** then method **300** continues with **376-378** of FIG. 3D. As shown in FIG. 3D, **376-378** involve: outputting instructions from the computing device instructing the user to input identification information (e.g., a name, an address, a phone number, an account number, etc.) into the system (e.g., system **100** of FIG. 1); and searching a datastore (e.g., datastore **124** of FIG. 1) for any purchase transaction information associated with the identification information. If purchase transaction information is not found during the search **[380:NO],** then **384** is performed where one or more actions is taken. These actions include, but are not limited to, notifying the user that no purchase transaction information was found, instructing the user to see store personnel, terminate the item return process, and/or return to **302** of FIG. 3A. If purchase transaction information is found during the search [**380:YES**], then **382** is performed where method **300** goes to **314** which will be described below.

Returning to FIG. 3A, if the user does have a receipt **[312:YES],** then method **300** continues with **314-318. 314-318** involve: outputting instructions from the computing device instructing the user to place the printed receipt on the counter (e.g., counter **130** of FIG. 1) at a location in the FOV of a camera (e.g., camera **106** of FIG. 1) or place a display of an electronic device (e.g., a smart phone **182** of FIG. 1) showing the electronic receipt in the FOV of the camera; capturing an image of the receipt; and analyzing the receipt image to determine if a credit card or other non-cash payment was used to purchase the item.

If a credit card or other non-cash payment was used to purchase the item **[320:YES],** then **322-324** are performed. **322-324** involve: outputting instructions from the computing device instructing the user to place the credit card in the FOV of the camera (e.g., camera **106** of FIG. 1); and capturing an image of the credit card. Additionally or alternatively, **322-324** involve: placing the electronic device (e.g., a smart phone **182** of FIG. 1) in proximity to an SRC device (e.g., scanner **126** of FIG. 1) of the return station (e.g., return station **102** of FIG. 1); and obtaining a token or other code from the electronic device.

If a credit card was not used **[320:NO],** then optional **326-328** are performed which involve: outputting instructions from the computing device instructing the user to face a camera (e.g., camera **128** of FIG. 1); and capturing an image of the person's face.

Upon completing **324 or 328,** method **300** continues with **330.** In **330,** the enterprise system (e.g., system **100**) verifies that the item's return is authorized by (A) determining if the credit card number, token or code obtained in **324** matches that used to purchase the item or (B) determining if the person shown in the image captured in **328** matches the person shown in an image captured by a POS station (e.g., POS station **180** of FIG. 1) during the purchase transaction for the item. These determinations can be made via comparison operations performed by a remote server (e.g., computing device **122** of FIG. 1) using purchase transaction data stored in a datastore (e.g., datastore **124** of FIG. 1). The purchase transaction data can include, but is not limited to, a time, a date, a list of purchased item identifiers, a price of each purchased items, a credit card number, a token, a code, and an image of the person(s) who purchased the items.

Subsequently, method **300** continues with **332** of FIG. 3B. As shown in FIG. 3B, **332** involves determining whether authorization of the item's return has been verified. If not **[332:NO],** then **334** is performed where one or more actions are taken. These actions can include, but are not limited to, notifying the person that the item's return is not authorized, analyzing the person's conduct to determine if it is suspicious based on machine learned patterns of suspicious conduct/movements and/or machined learned normal movement patterns for the person, and/or return to **306.** Suspicious conduct can be detected by capturing a video of the person while (s)he is attempting to return the item, analyzing the video to detect a motion pattern specifying the person's movements, comparing the motion pattern to the machined learned patterns of suspicious conduct/movements, and/or comparing the motion pattern to the machined learned normal movement patterns for the person. If a match exists between the motion pattern and at least one of the machined learned patterns of suspicious conduct/movements, then suspicious conduct is detected. Otherwise suspicious conduct is not detected. If a match exists between the motion pattern and the machined learned normal movement patterns for the person, then suspicious conduct is not detected. Otherwise suspicious conduct is detected.

If the item's return is authorized **[332:YES],** then **336** is performed where instructions are output from the computing device instructing the user to place the item in proximity to a scanner (e.g., scanner **126** of FIG. 1). In **338,** the item is scanned to obtain at least one code therefrom. The code can include, but is not limited to, a barcode, a SKU and/or a UPC. The code is processed in **340** to determine the brand of the item and the type of item.

Next in **342,** instructions are output from the computing device (e.g., computing device **110** of FIG. 1) instructing the user to place the item (e.g., item **136** of FIG. 1) on a weight scale (e.g., weight scale **114** of FIG. 1). The weight scale then measures the weight of the item in **344.** The measured weight can be passed to an internal computing device (e.g., computing device **118** of FIG. 1) of the return station **102** for storage and/or processing. The measured weight can be stored locally in a memory (e.g., memory **212** of FIG. 2) and/or remotely in a datastore (e.g., datatore **124** of FIG. 1).

In **346,** an image of the item is captured by a camera (e.g., camera **106** of FIG. 1) while the item rests on the weight scale. The camera can include, but is not limited to, a 3D camera such that the item's height is obtained in addition to its length and width. The captured image is processed in **348** to determine if it has a machined learned feature of a corresponding counterfeit item. This determination can be made by extracting features of the item from the captured image, and comparing the extracted features to machined learned features of one or more counterfeit items. If a match exits between the extracted features and the machined learned features, store personnel is notified. If a match does not exist between the extracted features and the machined learned features, method **300** continues with **350.**

**350** involves processing the image to determine a size and color of the item, as well as identify any authentication mark made on the item. Next, operations are performed in **352** to validate that the item being returned is the previously purchased item. This validation is made by determining (A) if the item's size, color, weight and authentication mark are consistent with an item having the brand and type specified by the code obtained in **338,** or (B) if the item is not associated with a previous return attempt. Determination (B) can be made based on result from comparing the code obtained in **338** to a code acquired in a previous return attempt. If a match exists, then it is determined that the item is associated with a previous return attempt. Otherwise, a determination is made that the item is not associated with a previous return attempt.

If a validation is not made that the item being returned is the previously purchased item **[354:NO],** then **356** is performed where one or more actions are taken. These actions can include, but are not limited to, notifying the user that the item is incorrect, and/or returning to **336.**

If a validation is made that the item being returned is the previously purchased item **[354:YES],** then method **300** continues with **358** of FIG. 3C. As shown in FIG. 3C, **358** involves analyzing the image of the item to determine its condition. A determination is then made in **360** as to whether or not the item can be resold based on its condition. For example, a item can be resold if it is not damages and/or if its condition is the same as that at the time of purchase. If the item cannot be resold **[362:NO],** then **364** is performed where one or more actions is taken. These actions can include, but are not limited to, notifying the person (e.g., person **132** of FIG. 1) that the item is not accepted for return, notifying store personnel (e.g., store personnel **134** of FIG. 1) that an item is not accepted for return based on a given policy, store a reason code for the return failure, and/or go to **374** which will be described below.

If the item can be resold **[362:YES],** then **366-372** are performed. **366-372** involve: outputting instructions from the computing device (e.g., computing device **110** of FIG. 1) instructing the user (e.g., person **132** of FIG. 1) to place the item (e.g., item **136** of FIG. 1) on a conveyer system (e.g., conveyer system **104** of FIG. 1); performing operations by the conveyer system to direct the item to a storage area of a plurality of storage areas (e.g., storage bins **116** of FIG. 1) based on the item's type determined in previous **340;** outputting a receipt. The receipt can be a printed receipt or an electronic receipt. Subsequently, **374** is performed where method **300** ends or other processing is performed.

The present solution can be used in various applications. In some scenarios, an image of the purchaser and/or associated metadata are recorded when an item is purchased. This image and metadata can be used to authenticate the person when (s)he returns the item to the store. This authentication is useful when the receipt is lost.

In other scenarios, an image of the purchaser and/or associated metadata are recorded when an item is purchased. Also, machine learning operations are performed to (A) determine the state or condition of the item at the time of purchase and (B) determine the state or condition of the item at the time of return. The state/condition of (B) is compared to the state/condition of (A) when the item is returned. This could stop cases where someone returns an item and claims that the item was damages when they bought it or cases where someone tries to return a counterfeit item that doesn't match the item they purchased.

The present solution can also be used to stop fraudulent returns. For example, the present solution could stop cases where a person takes an item of the retail floor and tries to return the item without any purchase thereof. This could save retail stores a significant amount of money in improper store credits.

In some scenarios, voice recognition is employed. System **100** would further comprise an audio microphone, a display, and an audio speaker. These additional components would be connected to the computing device **110,** computing device **118** and/or the enterprise system **122, 123.** AI could process the images and output questions on the display or from the audio speaker. The customer could hold his(her) credit card in from of a camera 106, 128 so that a credit card number could be read therefrom. The customer could then be prompted to input additional authenticating information such as a zip code associated with the credit card. This would allow system **100** to be implemented with simple, low cost hardware.

Although the present solution has been illustrated and described with respect to one or more implementations, equivalent alterations and modifications will occur to others skilled in the art upon the reading and understanding of this specification and the annexed drawings. In addition, while a particular feature of the present solution may have been disclosed with respect to only one of several implementations, such feature may be combined with one or more other features of the other implementations as may be desired and advantageous for any given or particular application. Thus, the breadth and scope of the present solution should not be limited by any of the above described embodiments. Rather, the scope of the present solution should be defined in accordance with the following claims and their equivalents.

## Claims

1. A method for returning an item (136), comprising, at a time of return:
- performing item return operations by a computing device (110, 118, 122, 200) using machine learned information about a condition of the item (136), the information obtained, using machine learning operations, at a time of sale of the item;
- performing, at the time of return, imaging and scanning operations to determine item related information comprising a product type for the item (136), and zero or more of a brand of the item (136), a size of the item (136), a color of the item (136), an authentication mark made on the item (136), a weight of the item (136), and a code associated with the item (136);
- based on the item related information, validating that the item (136) is not associated with a previous return attempt; and
- if the item is validated that it is not associated with previous return attempts and it is determined that the condition of the item at the time of return is resalable, automatively sorting the item (136) using a conveyer system (104) to move the item (136) from a counter (130) to a respective storage bin (116) of a plurality of storage bins (116), the respective storage bin (116) assigned to a product type of the item, otherwise setting a flag that the item is not resalable and/or providing a notification to store personnel and/or ending the method;
wherein performing the item return operations further includes:
- performing, at the time of return, machine learning operations to obtain machine learned information about the condition of the item at the time of return, and determine the condition of the item at the time of return;
- comparing the condition at the time of return to the condition at the time of sale; and
- determining, based on the comparison, whether the condition at the time of return is damaged or resalable.

2. The method according to claim 1,
wherein performing item return operations further includes performing the item return operations using at least one of machine learned information about a person (132) who purchased the item (136), and machine learned information about a person (132) returning the item (136).

3. The method according to claim 1, further comprising:
- determining if the item (136) is a counterfeit item based on learned features and characteristics of counterfeit items which are not consistent with features and characteristics of corresponding non-counterfeit items;
wherein performing the item return operations includes:
- allowing return of the item (136) if it is determined that the item (136) is not a counterfeit item; and
- denying the return of the item (136) if it is determined that the item (136) is a counterfeit item.

4. The method according to claim 2,
wherein performing the item return operations includes (A) determining if a credit card number, token or code obtained from the person (132) returning the item matches that used by the person (132) who purchased the item (136), or (B) determining if the person (132) returning the item shown in an image captured by a camera (106, 128) located by a return station (102) matches the person (132) who purchased the item shown in an image captured during a purchase transaction for the item (136).

5. The method according to one of claims 1 to 4,
wherein automatively sorting the item (136) is further based on validating that the item (136) being returned is a previously purchased item (136) based on the item related information.

6. The method according to one of claims 1 to 5,
wherein automatively sorting the item (136) is further based on determining a condition of the item (136) based on contents of an image captured while the item (136) is being returned.

7. The method according to claim 1 or 6,
wherein automatively sorting the item (136) is further based on determining if the condition of the item (136) is the same or different at a time of purchase and a time of return.

8. A system (100), comprising:
- a processor (206);
- a non-transitory computer-readable storage medium (218) comprising programming instructions (220) that are configured to cause the processor (206) to implement a method for returning items (136) in a computing device (110, 118, 122, 200), wherein the programming instructions (220) comprise instructions (220), which, when executed by the processor (206), cause the processor (206) to perform a method according to any of claims 1 to 7.

## Patentansprüche

1. Verfahren zum Zurückgeben eines Artikels (136), umfassend, zu einem Zeitpunkt der Rückgabe:
- Durchführen von Artikelrückgabeoperationen durch eine Computervorrichtung (110, 118, 122, 200) unter Verwendung von maschinell gelernter Informationen über einen Zustand des Artikels (136), wobei die Informationen unter Verwendung von maschinellen Lernoperationen zu einem Zeitpunkt des Verkaufs des Artikels erhalten wurden;
- Durchführen, zum Zeitpunkt der Rückgabe, von Bildgebungs- und Scanoperationen, um artikelbezogene Informationen zu bestimmen, die einen Produkttyp für den Artikel (136) und null oder mehr von einer Marke des Artikels (136), einer Größe des Artikels (136), einer Farbe des Artikels (136), einer auf dem Artikel (136) vorgenommenen Authentifizierungsmarkierung, einem Gewicht des Artikels (136) und einem mit dem Artikel (136) assoziierten Code umfassen;
- basierend auf den artikelbezogenen Informationen, Validieren, dass der Artikel (136) nicht mit einem vorherigen Rückgabeversuch assoziiert ist; und
- wenn für den Artikel validiert wird, dass er nicht mit vorherigen Rückgabeversuchen assoziiert ist, und bestimmt wird, dass der Zustand des Artikels zum Zeitpunkt der Rückgabe wiederverkäuflich ist, automatisches Sortieren des Artikels (136) unter Verwendung eines Fördersystems (104), um den Artikel (136) von einer Theke (130) zu einem jeweiligen Lagerbehälter (116) einer Vielzahl von Lagerbehältern (116) zu bewegen, wobei der jeweilige Lagerbehälter (116) einem Produkttyp des Artikels zugewiesen ist, andernfalls Setzen eines Flags, dass der Artikel nicht wiederverkäuflich ist, und/oder Bereitstellen einer Benachrichtigung an Ladenpersonal und/oder Beenden des Verfahrens;
wobei das Durchführen der Artikelrückgabeoperationen ferner einschließt:
- Durchführen, zum Zeitpunkt der Rückgabe, von maschinellen Lernoperationen, um maschinell gelernte Informationen über den Zustand des Artikels zum Zeitpunkt der Rückgabe zu erhalten und den Zustand des Artikels zum Zeitpunkt der Rückgabe zu bestimmen;
- Vergleichen des Zustands zum Zeitpunkt der Rückgabe mit dem Zustand zum Zeitpunkt des Verkaufs; und
- Bestimmen, basierend auf dem Vergleich, ob der Zustand zum Zeitpunkt der Rückgabe beschädigt oder wiederverkäuflich ist.

2. Verfahren nach Anspruch 1, wobei das Durchführen von Artikelrückgabeoperationen ferner das Durchführen der Artikelrückgabeoperationen unter Verwendung von mindestens einem der maschinell gelernten Informationen über eine Person (132), die den Artikel (136) gekauft hat, und maschinell gelernten Informationen über eine Person (132), die den Artikel (136) zurückgibt, einschließt.

3. Verfahren nach Anspruch 1, ferner umfassend:
- Bestimmen, ob der Artikel (136) ein gefälschter Artikel ist, basierend auf gelernten Merkmalen und Eigenschaften von gefälschten Artikeln, die nicht mit Merkmalen und Eigenschaften entsprechender nicht gefälschter Artikel übereinstimmen;
wobei das Durchführen der Artikelrückgabeoperationen einschließt:
- Zulassen der Rückgabe des Artikels (136), wenn bestimmt wird, dass der Artikel (136) kein gefälschter Artikel ist; und
- Verweigern der Rückgabe des Artikels (136), wenn bestimmt wird, dass der Artikel (136) ein gefälschter Artikel ist.

4. Verfahren nach Anspruch 2, wobei das Durchführen der Artikelrückgabeoperationen einschließt: (A) Bestimmen, ob eine Kreditkartennummer, ein Token oder ein Code, die/der von der den Artikel zurückgebenden Person (132) erhalten wurde, mit demjenigen übereinstimmt, der von der Person (132) verwendet wurde, die den Artikel (136) gekauft hat, oder (B) Bestimmen, ob die den Artikel zurückgebende Person (132), die auf einem von einer an einer Rückgabestation (102) befindlichen Kamera (106, 128) aufgenommenen Bild gezeigt wird, mit der Person (132) übereinstimmt, die den Artikel gekauft hat und auf einem während einer Kauftransaktion für den Artikel (136) aufgenommenen Bild gezeigt wird.

5. Verfahren nach einem der Ansprüche 1 bis 4, wobei das automatische Sortieren des Artikels (136) ferner auf dem Validieren basierend auf den artikelbezogenen Informationen basiert, dass der zurückgegebene Artikel (136) ein zuvor gekaufter Artikel (136) ist.

6. Verfahren nach einem der Ansprüche 1 bis 5, wobei das automatische Sortieren des Artikels (136) ferner auf dem Bestimmen eines Zustands des Artikels (136) basierend auf Inhalten eines Bildes basiert, das aufgenommen wird, während der Artikel (136) zurückgegeben wird.

7. Verfahren nach Anspruch 1 oder 6, wobei das automatische Sortieren des Artikels (136) ferner auf dem Bestimmen basiert, ob der Zustand des Artikels (136) zu einem Zeitpunkt des Kaufs und einem Zeitpunkt der Rückgabe gleich oder verschieden ist.

8. System (100), umfassend:
- einen Prozessor (206);
- ein nicht flüchtiges computerlesbares Speichermedium (218), das Programmierungsanweisungen (220) umfasst, die konfiguriert sind, um den Prozessor (206) zu veranlassen, ein Verfahren zum Zurückgeben von Artikeln (136) in einer Computervorrichtung (110, 118, 122, 200) zu implementieren, wobei die Programmierungsanweisungen (220) Anweisungen (220) umfassen, die, wenn sie durch den Prozessor (206) ausgeführt werden, den Prozessor (206) veranlassen, ein Verfahren nach einem der Ansprüche 1 bis 7 durchzuführen.

## Revendications

1. Procédé permettant de retourner un article (136), comprenant, à un moment de retour :
- la réalisation d'opérations de retour d'article par un dispositif informatique (110, 118, 122, 200) à l'aide d'informations issues de l'apprentissage automatique concernant un état de l'article (136), les informations ayant été obtenues, à l'aide d'opérations d'apprentissage automatique, à un moment de vente de l'article ;
- la réalisation, à un moment de retour, d'opérations d'imagerie et de numérisation pour déterminer des informations relatives à l'article comprenant un type de produit pour l'article (136), et zéro ou plusieurs parmi une marque de l'article (136), une taille de l'article (136), une couleur de l'article (136), une marque d'authentification apposée sur l'article (136), un poids de l'article (136) et un code associé à l'article (136) ;
- sur la base des informations relatives à l'article, la validation du fait que l'article (136) n'est pas associé à une tentative de retour précédente ; et
- si l'article est validé comme n'étant pas associé à des tentatives de retour précédentes et s'il est déterminé que l'état de l'article au moment de retour permet sa revente, le tri automatique de l'article (136) à l'aide d'un système de convoyage (104) pour déplacer l'article (136) depuis un comptoir (130) vers un compartiment de stockage respectif (116) parmi une pluralité de compartiments de stockage (116), le compartiment de stockage respectif (116) étant attribué à un type de produit de l'article, dans le cas contraire, la définition d'un indicateur signalant que l'article n'est pas revendable et/ou la fourniture d'une notification au personnel de magasin et/ou la fin du procédé ;
dans lequel la réalisation des opérations de retour d'article comporte en outre :
- la réalisation, au moment de retour, d'opérations d'apprentissage automatique pour obtenir des informations issues de l'apprentissage automatique concernant l'état de l'article au moment de retour, et la détermination de l'état de l'article au moment de retour ;
- la comparaison de l'état au moment de retour avec l'état au moment de vente ; et
- la détermination, sur la base de la comparaison, de savoir si l'état au moment de retour présente des dommages ou permet la revente.

2. Procédé selon la revendication 1, dans lequel la réalisation d'opérations de retour d'article comporte en outre la réalisation des opérations de retour d'article à l'aide d'au moins l'une parmi des informations issues de l'apprentissage automatique concernant une personne (132) qui a acheté l'article (136), et des informations issues de l'apprentissage automatique concernant une personne (132) retournant l'article (136).

3. Procédé selon la revendication 1, comprenant en outre :
- la détermination de savoir si l'article (136) est un article contrefait sur la base de traits et de caractéristiques appris d'articles contrefaits qui ne correspondent pas aux traits et caractéristiques des articles non contrefaits correspondants ;
dans lequel la réalisation des opérations de retour d'article comporte :
- l'autorisation d'un retour de l'article (136) s'il est déterminé que l'article (136) n'est pas un article contrefait ; et
- le refus du retour de l'article (136) s'il est déterminé que l'article (136) est un article contrefait.

4. Procédé selon la revendication 2, dans lequel la réalisation des opérations de retour d'article comporte (A) la détermination de savoir si un numéro de carte de crédit, un jeton ou un code obtenu auprès de la personne (132) retournant l'article correspond à celui utilisé par la personne (132) qui a acheté l'article (136), ou (B) la détermination de savoir si la personne (132) retournant l'article présenté sur une image capturée par un appareil photo (106, 128) situé près d'un point de retour (102) correspond à la personne (132) qui a acheté l'article présenté sur une image capturée lors d'une transaction d'achat pour l'article (136).

5. Procédé selon l'une des revendications 1 à 4, dans lequel le tri automatique de l'article (136) repose en outre sur la validation du fait que l'article (136) en cours de retour est un article (136) acheté précédemment sur la base des informations relatives à l'article.

6. Procédé selon l'une des revendications 1 à 5, dans lequel le tri automatique de l'article (136) repose en outre sur la détermination d'un état de l'article (136) sur la base des contenus d'une image capturée pendant que l'article (136) est en cours de retour.

7. Procédé selon la revendication 1 ou 6, dans lequel le tri automatique de l'article (136) repose en outre sur la détermination de savoir si l'état de l'article (136) est identique ou différent à un moment d'achat et à un moment de retour.

8. Système (100), comprenant :
- un processeur (206) ;
- un support de stockage lisible par ordinateur non transitoire (218) comprenant des instructions de programmation (220) qui sont configurées pour amener le processeur (206) à implémenter un procédé permettant de retourner des articles (136) dans un dispositif informatique (110, 118, 122, 200), dans lequel les instructions de programmation (220) comprennent des instructions (220) qui, lorsqu'elles sont exécutées par le processeur (206), amènent le processeur (206) à réaliser un procédé selon l'une quelconque des revendications 1 à 7.
